# EUROPEAN PATENT SPECIFICATION

(11) **EP 2 489 640 B1**
(45) Date of publication and mention of the grant of the patent: **05.04.2017**
(21) Application number: 12155373.9
(22) Date of filing: 14.02.2012
(51) Int. Cl.: C02F 1/52, C02F 1/66, C02F 5/00, C02F 11/04

(54) **Method for struvite recovery using phosphate injection**
Verfahren zur Struvitwiedergewinnung unter Verwendung einer Phosphatinjektion
Procédé pour la récupération de struvite comprenant une injection de phosphate

(30) Priority: 15.02.2011 US 201161443183 P
(43) Date of publication of application: 22.08.2012
(73) Proprietor: Ostara Nutrient Recovery Technologies Inc., Vancouver, British Columbia V6E 2R1 (CA)
(72) Inventor: Kuzma, Matt, Seattle, WA Washington 98107 (US); Baur, Robert James, Lake Oswego, OR Oregon 97035 (US); Sathyanarayana, Ram Prasad Melahalli, Valrico, FL Florida 33594 (US)
(74) Representative: Isarpatent

(56) References cited:
- EP-A1- 0 363 612
- WO-A2-2009/102142
- US-B1- 6 287 471
- MUNCH E V ET AL: "Controlled struvite crystallisation for removing phosphorus from anaerobic digester sidestreams", WATER RESEARCH, ELSEVIER, AMSTERDAM, NL, vol. 35, no. 1, 1 January 2001 (2001-01-01), pages 151-159, XP004236295, ISSN: 0043-1354, DOI: 10.1016/S0043-1354(00)00236-0
- Roy Pelletier: "The Troubleshooting Way", Florida Water Resources Journal, 1 April 2005 (2005-04-01), pages 8-11, XP002673581, Retrieved from the Internet: URL:http://www.fwea.org/cmsitems/attachmen ts/9/2TSW0405.pdf [retrieved on 2012-04-10]
- General Chemical: "Struvite Control in Wastewater", Technical Bulletin: Wastewater, 13 November 2009 (2009-11-13), XP002673643, Retrieved from the Internet: URL:http://www.generalchemical.com/assets/ pdf/Struvite_Control_in_Wastewater.pdf [retrieved on 2012-04-11]

## Description

### Technical Field

The invention relates to wastewater treatment for precipitating dissolved materials from wastewater. For example, the invention may be applied in struvite precipitation reactor systems. Embodiments relate to methods for inhibiting struvite formation and scaling problems upstream of a precipitation reactor while allowing and/or enhancing the recovery of struvite or other phosphorus-containing compounds in the precipitation reactor.

### Background

Reactors in general and fluidized bed reactors in particular have been used to remove and recover nutrients (i.e. ammonia and phosphorus) from wastewater that contains significant concentrations of phosphorus, often in the form of phosphate. Such wastewater may come from a wide range of sources. These include sources such as leaching from landfill sites, runoff from agricultural land, effluent from industrial processes, municipal wastewater, animal wastes, and the like. Such wastewater, if released into the environment without treatment, can result in excess effluent phosphorus levels.

Various phosphorus removal and recovery technologies exist. Some of the technologies provide fluidized bed reactors for removing phosphorus from aqueous solutions by producing struvite (MgNH₄PO₄ 6H₂O) or struvite analog or a phosphate compound in the form of pellets. Struvite can be formed by the reaction:

Mg²⁺ + NH₄⁺ + PO₄³⁻ +6H₂O ↔ MgNH₄PO₄·6H₂O

Examples of reactors used to remove and recover phosphorus from wastewater solutions have been described in various references. They include:
- Regy et al., Phosphate recovery by struvite precipitation in a stirred reactor, LAGEP (March to December 2001) includes a survey of various attempts to remove phosphorus and nitrogen from wastewater by struvite precipitation.
- Trentelman, U.S. Patent No. 4,389,317 and Piekema et al., Phosphate Recovery by the Crystallization Process: Experience and Developments, paper presented at the 2nd International Conference on Phosphate Recovery for Recycling from Sewage and Animal Wastes, Noordwijkerhout, the Netherlands, March 12-13, 2001, disclose a reactor and method for precipitating phosphate in the form of calcium phosphate, magnesium phosphate, magnesium ammonium phosphate or potassium magnesium phosphate.
- Ueno et al., Three years experience on operating and selling recovered struvite from full scale plant (2001), Environmental Technology, v. 22, p. 1373, discloses the use of sidestream crystallization reactors to remove phosphate in the form of magnesium ammonium phosphate (also known as struvite).
- Tsunekawa et al., Patent Abstracts of Japan No. 11-267665 discloses a reactor for removing phosphorus from water.
- Koch et al., *fluidized bed wastewater treatment,* US Patent No. 7,622,047.

WO 2009/102142 A2 relates to a method for removing nitrogen and producing struvite from nitrogen-rich wastewater. WO 2009/102142 A2 mentions the addition of H₂PO₄ before the digestion step.

One problem with wastewater treatment systems and reactors is that struvite or scale having other compositions may form undesirably in effluent piping systems or otherwise upstream of the precipitating reactor. It is known to use certain inhibitors like polyphosphates, phosphonates, polymers, or other compounds or mixtures to help to limit or stop struvite formation in pipes but these inhibitors also inhibit the desired struvite formation downstream in the reactor. A cost effective solution is needed to address this problem.

### Brief Description of the Drawings

The accompanying drawings illustrate non-limiting embodiments of the invention.
Figure 1 is a schematic diagram of a wastewater treatment system according to one example embodiment of the invention.
Figure 2 is a diagram of the fluidized bed reactor portion of a wastewater treatment system according to one example embodiment of the invention.
Figure 3 is a flow chart which illustrates a general method of treating wastewater in a wastewater treatment system according to another example embodiment of the invention.

### Description

Throughout the following description, specific details are set forth in order to provide a more thorough understanding of the invention. However, the invention may be practiced without these particulars. In other instances, well-known elements have not been shown or described in detail to avoid unnecessarily obscuring the invention. Accordingly, the specification and drawings are to be regarded in an illustrative, rather than a restrictive, sense.

Some embodiments in the following description relate to reactor apparatus (not according to the present invention) or methods wherein phosphorus in wastewater is precipitated in the form of struvite or struvite analogs or a phosphate compound. This choice of example coincides with an aspect of the invention believed to have significant commercial utility. The scope of the invention, however, is not limited to these examples, but is defined by the appended claims.

An embodiment finds particular application in wastewater treatment systems comprising a fluidized bed reactor of the type described in Koch et al., US Patent No. 7,622,047, entitled "Fluidized Bed Wastewater Treatment." Such systems may produce pellets of struvite, struvite analogs or other phosphorus-containing solids from wastewater.

For convenience, the term "wastewater" is used in the following description and claims to describe aqueous solutions such as industrial and municipal wastewater, leachate, runoff, animal wastes, effluent or the like. The term "wastewater" is not limited to effluent from municipal sewage, animal waste, or any other specific source. Some embodiments provide methods for treating municipal sewage and/or animal waste. Some embodiments provide methods and apparatus for treating other kinds of wastewater. Indeed, the term "wastewater" should also be considered to include any solution having certain properties and constituents of wastewater (i.e. any wastewater-like solution) which could optionally be manufactured from raw materials strictly for use in the production of struvite.

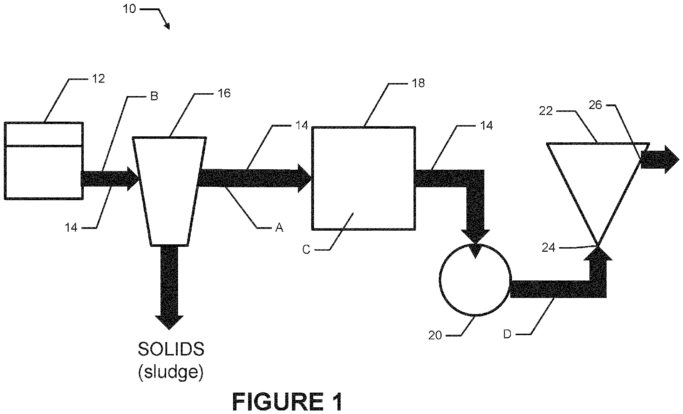

Just by way of example, a typical wastewater treatment system 10 (Figure 1) may comprise a number of elements connected by a piping system 14. Wastewater may begin the treatment process in a digester 12, undergoing aerobic or anaerobic digestion. Digested wastewater may then be pumped to a solid/liquid separation device 16 such as a centrifuge or other solids separation device by way of which solids (sludge) may be removed. Examples of solid/liquid separation devices that maybe used are centrifuges, clarifiers, thickeners, gravity belt thickeners, belt presses and the like. From solid/liquid separation device 16 effluent may pass to a further tank 18, which may be termed a clarifying/settling tank or equalization/storage tank, from which the effluent may be transferred to precipitation reactor tank 22 through inlet 24. In most cases, between these various elements the wastewater is pumped by means of one or more pumps 20 and passes through various valves, pipe fittings, and instruments.

Struvite or other phosphorus-containing compounds may be precipitated in reactor tank 22 in a variety of ways including through the process described in Koch et al., US Patent No. 7,622,047. Fully treated effluent is removed from reactor tank 22 at outlet 26.

In systems for treating wastewater containing dissolved materials that tend to precipitate at higher pH levels, scale formation in effluent piping can be a problem. An example is a system for recovery of phosphate in the form of struvite from liquid effluents of anaerobic processes (e.g., anaerobic digester liquors, dewatering liquors at municipal wastewater treatment plants, etc.). The solubility of struvite is a function of pH and decreases when pH increases. As pH increases, struvite precipitates from the wastewater. In such systems, struvite formation may be encouraged as a result of high pH increases and it is thus desirable to reduce pH upstream of the reactor tank.

One way in which pH increases is when carbon dioxide is released from the wastewater. Carbon dioxide tends to be released when wastewater cascades down drains or flows in partially-full drain pipes in the effluent piping system. Carbon dioxide is typically present at elevated levels in entering wastewater due to the high fraction of carbon dioxide in the sealed atmosphere in anaerobic treatment tanks that may precede the phosphorus recovery process in a wastewater treatment plant. Once the wastewater is exposed to ambient air, and especially when mixed turbulently with air, or when the fluid pressure is reduced (e.g. in pump suction piping or near piping flow restrictions etc.) the carbon dioxide tends to offgas, causing pH increase in the wastewater. The carbon dioxide offgassing and the resultant pH increase can therefore lead to increased struvite scale formation in the effluent piping system upstream from a reactor.

This scale formation is not necessarily a wide-spread phenomenon, as turbulent fluid flow in pipes can cause small localized variations in pH sufficient to trigger struvite precipitation and/or scale formation, for example, at the location of a valve or other feature (an elbow, for example) that causes the local turbulence or local pressure drop. Struvite scale then can build up at such a location.

In struvite/phosphate recovery systems pH can be controlled to promote the formation of struvite in a reactor and to reduce effluent phosphate levels. One preferred range of pH is between 7.0 and 8.5. The carbon dioxide that can be present at elevated levels in the wastewater results in low pH conditions that are unfavorable to the formation of struvite in the reaction tank. In order to counter this problem, one can add alkaline (basic) substances such as sodium hydroxide (NaOH), magnesium hydroxide (Mg(OH)₂), ammonium hydroxide (NH₄OH), anhydrous ammonia (NH₃) or the like to the system in or upstream from the reaction tank to increase the pH of the wastewater and to promote struvite formation in the reaction tank. However, purchasing such materials and supplying and maintaining equipment to introduce such materials into the process adds to the cost of operating a wastewater treatment system.

One way to inhibit premature struvite formation is to add CO₂ to the system, decreasing pH, as described in a co-pending application filed by the applicants entitled "METHODS AND APPARATUS FOR STRUVITE RECOVERY USING UPSTREAM CO₂ INJECTION", which is incorporated herein by reference. One other way to decrease pH, it has been determined, is to add phosphate in the form of phosphoric acid, H₃PO₄, either on its own or in combination with CO₂ as discussed below.

The present invention provides methods which add phosphate to the system, preferably by way of injection of H₃PO₄ in any of the elements of the treatment system upstream of the reactor, including into the piping system 14. The addition of H₃PO₄ decreases pH and inhibits struvite formation. It has been determined that struvite precipitation in a water treatment system can be largely delayed until the effluent reaches the reactor if enough H₃PO₄ is added throughout the system.

It will be appreciated that H₃PO₄ could be injected into the water treatment process at any point in the process upstream of the reactor 22, for example at stage "A" as shown in Figure 1 where the effluent is pumped from the digester 12 to the solid/liquid separation device 16. However, H₃PO₄ injection will assist in inhibiting struvite precipitation only downstream from the point at which H₃PO₄ is injected, so preferably H₃PO₄ is injected early on in the treatment process to prevent scaling throughout the treatment process. Most preferably, the H₃PO₄ should be injected at multiple stages (for example, at each of stages "A", "B", "C" and "D") throughout the process and system. H₃PO₄ may also be injected at or near locations where it is known or likely that there is or will be a scale build-up due to local turbulent conditions (for example H₃PO₄ may be injected upstream from and near a valve, elbow, or other component prone to scaling which would otherwise tend to be subjected to scaling as a result of struvite precipitation).

Scale formation can also be detected by measuring pressure in the piping system, and the dose of reagent (e.g. one or more of CO₂/H₃PO₄ in each appropriate application) can be adjusted in response to measured pressure signals. For example, fouling in a pump would result in lower discharge pressure for the same pump speed, or fouling in a piping system would result in a higher pump discharge pressure upstream in the piping system for the same flow.

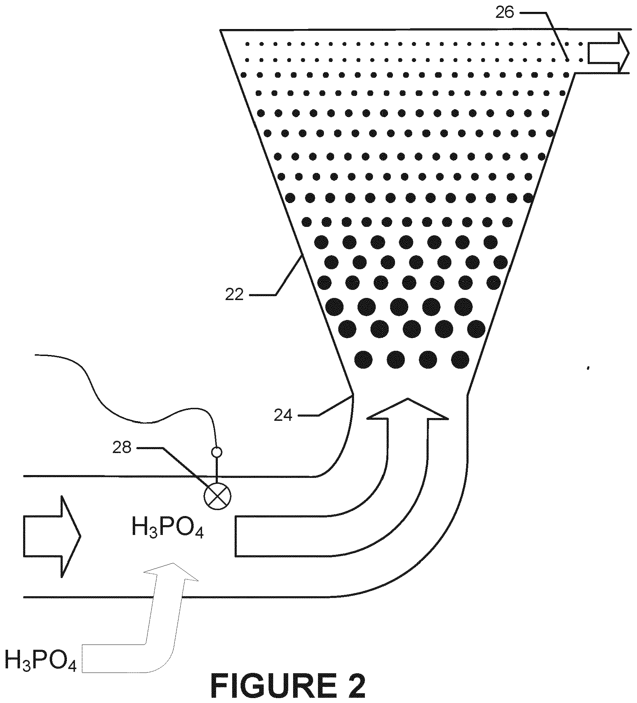

It will be appreciated that one can easily measure the pH of the effluent at one or more points in the system to control the rate of flow of any injected H₃PO₄. One such suitable point is at or near the inlet 24 of reactor 22, as shown in Figure 2 (see pH probe 28.) A metering mechanism (e.g. a programmable process controller) may then be employed to control flow of H₃PO₄ to the system in response to readings from probe 28. The rate of injection of H₃PO₄ and/or CO₂ may be controlled based on fluid pressures and/or flow rates in addition to or instead of pH. The metering mechanism may be connected to receive signal inputs from one or more pH probes and/or one or more pressure sensors and/or one or more flow meters, for example. The metering mechanism may be connected to control valves pumps or other metering devices to add one or more of CO₂ and H₃PO₄ at each of one or more locations in the system in response to the signal inputs. However, the system does not necessarily need to measure pH and the system can also simply be controlled by measuring the flow volume in pipe (flow proportional control).

The following experimental data show how pH decreases in a centrate following phosphate addition through addition of H₃PO₄:
Phosphoric Acid Jar Tests - Centrate was collected around 2:45 pm
Sampling point: Suction side of Centrate Feed pump (by opening the valve from the tank)
Initial pH of Centrate 7.85 H₃PO₄ 75%

| Cumulative H₃PO₄ used | | H₃PO₄ added | pH | Centrate vol |
|---|---|---|---|---|
| µL | | µL | | mL |
| 0 | | 0 | 7.85 | 1800 |
| 100 | | 100 | 7.5 | 1800 |
| 200 | | 100 | 7.28 | 1800 |
| 300 | | 100 | 7.12 | 1800 |
| 400 | | 100 | 7 | 1800 |
| 500 | | 100 | 6.91 | 1800 |

**Final Jar Test**

| | **Raw Centrate (2L)** | H₃PO₄ **Dosed Centrate (100** µ**L)** | |
|---|---|---|---|
| **pH** | 7.85 | 7.54 | |
| **Mg (D)** | 2.6 | 2.9 | **mg/L** |
| **PO4**-**P (D)** | 242 | 352 | **mg/L** |
| | | | |

| Cumulative H₃PO₄ addition | H₃PO₄ added | pH | Centrate vol |
|---|---|---|---|
| µL | µL | | mL |
| 0 | 0 | 7.85 | 2000 |
| 50 | 50 | 7.6 | 2000 |
| 150 | 100 | 7.35 | 2000 |
| 200 | 50 | 7.2 | 2000 |
| 250 | 50 | 7.1 | 2000 |
| 300 | 50 | 7 | 2000 |

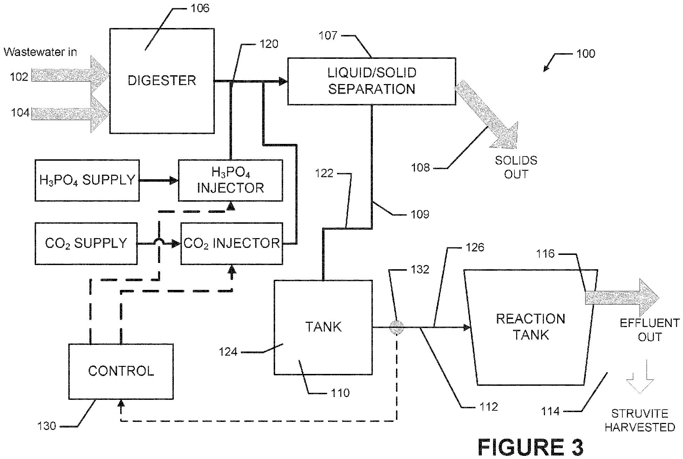

Figure 3 depicts apparatus and illustrates a method 100 according to an example embodiment of the invention. Method 100 takes fresh wastewater 102 or recycled wastewater 104 (optional) and subjects the wastewater to digestion 106 in a digester. Digested wastewater then travels to a centrifuge or other solid/liquid separation device where solids are separated 107 by centrifugation or other mechanism. Solids may be removed 108 from the wastewater at this stage. Wastewater is then fed 109 to a clarifying/settling or equalization/storage tank where it is allowed to settle 110, from which it is thereafter pumped 112 to a reaction tank from which struvite may be harvested 114. Treated effluent then exits 116 the reaction tank.

At one or more stages of the process, H₃PO₄ and/or CO₂ is injected into the system, for example at one or more of steps 120, 122, 124 and 126. A control device 130 may continuously control the flow of H₃PO₄ and/or CO₂ to accomplish a desired level of H₃PO₄ and/or CO₂ in response to signals received from one or more probes 132.

Among the advantages of injecting H₃PO₄ to reduce pH in a wastewater treatment system to produce struvite are that:
- only relatively small quantities of H₃PO₄ are required, and H₃PO₄ is inexpensive
- adding H₃PO₄ of course adds phosphate which is a required compound in the production of struvite (more struvite can be produced in a reactor which is not already at capacity.)
- adding H₃PO₄ in a reactor which is not already at capacity results in capture of more ammonia, which is almost always in excess in a wastewater treatment system, so the resulting effluent is cleaner.
- one can control Mg injection into the end reactor based in part on an amount of H₃PO₄ added upstream. In some embodiments a controller is configured to control a metering mechanism for adding a Mg-containing material at a rate determined at least in part by an amount of H₃PO₄ added upstream. In fact, one can add enough Mg to precipitate all reactor influent phosphate (the centrate phosphate plus any added phosphate) - this keeps ammonia removal constant.

To deal with localized variances in pH, the goal is to add enough H₃PO₄ to lower pH enough so that even with microfluctuations the pH in the pipe is lower than the pH at the inlet of the pipe, preventing struvite and scale formation.

At one or more stages of the process, H₃PO₄ is injected into the system, for example at one or more of steps 120, 122, 124 and 126.

Again, the H₃PO₄ can be added in conjunction with CO₂ injection. A control device 130 may continuously control the flow of CO₂ to accomplish a desired level of carbon dioxide in response to signals received from one or more probes 132. In some embodiments the relative amounts of CO₂ and H₃PO₄ added are controlled based at least in part on a production of the reactor. This control may be provided automatically and/or by human adjustment. If the reactor is at capacity, one can increase the relative amount of CO₂ injected to decrease pH. If reactor is not at capacity, one can use more H₃PO₄ to reduce pH while simultaneously providing more phosphate to use the unused capacity of the reactor and increase the yield of struvite.

One problem with wastewater treatment systems used to produce struvite is that there can be a large percentage of loss of struvite in the form of 'fines' - small struvite crystals that form but are so small they get carried off with effluent from the reactor. It is desirable to reduce upstream scale formation without creating a situation where too many fines form. At the reactor pH may change in a graduated manner and it is thought that this is beneficial for reducing formation of fines.

## Claims

1. A method for treating wastewater to produce struvite, the method comprising:
a. introducing wastewater into a wastewater treatment system;
b. after introducing the wastewater into the wastewater treatment system, digesting the wastewater in a digester (12);
c. from the digester (12), transferring the wastewater to a solid/liquid separation device (16);
d. from the solid/liquid separation device (16), removing solids from the wastewater and transferring the wastewater to a settling tank (18);
e. from the settling tank (18) transferring the wastewater to a struvite reactor tank (22) for the formation of struvite; and
f. removing an effluent from the struvite reactor tank (22);
the method further comprising
injecting H₃PO₄ into the effluent from the digester (12) at one or more points upstream of the reactor (22) during steps c. to e. in an amount sufficient to lower the pH of the wastewater to a level at which struvite is soluble.

2. The method of claim 1, wherein the H₃PO₄ is injected at multiple stages.

3. A method according to claim 1 or 2, further comprising the step of controlling the injection of the H₃PO₄ into the wastewater, in response to a signal received from a pH probe at or near an inlet (24) of the struvite reactor tank (22), to maintain a predetermined level of H₃PO₄ in the wastewater, the predetermined level in an amount sufficient to lower the pH of the wastewater to a level at which struvite is soluble.

4. A method according to any one of claims 1 to 3, comprising maintaining the pH of the wastewater in the struvite reactor tank (22) between 7.0 and 8.5.

5. A method according to any one of claims 1 to 4, further comprising injecting CO₂ into the wastewater upstream of the struvite reactor tank (22).

6. A method according to claim 5, comprising injecting the CO₂ into one or more of the digester (12), the solid/liquid separation device (16), the settling tank (18), and a piping system (14) of the treatment system.

## Patentansprüche

1. Verfahren zum Behandeln von Abwasser, um Struvit herzustellen, wobei das Verfahren Folgendes umfasst:
a. Einleiten von Abwasser in ein Abwasserbehandlungssystem;
b. nach dem Einleiten des Abwassers in das Abwasserbehandlungssystem Ausfaulen des Abwassers in einem Faulbehälter (12);
c. aus dem Faulbehälter (12) Transferieren des Abwassers zu einer Feststoff/Flüssigkeit-Trennvorrichtung (16),
d. aus der Feststoff/Flüssigkeit-Trennvorrichtung (16) Entfernen von Feststoffen aus dem Abwasser, und Transferieren des Abwassers zu einem Absetztank (18) ;
e. aus dem Absetztank (18) Transferieren des Abwassers zu einem Struvit-Reaktortank (22) für die Bildung von Struvit; und
f. Entfernen eines Ausflusses aus dem Struvit-Reaktortank (22);
wobei das Verfahren des Weiteren Folgendes umfasst:
Einspritzen von H₃PO₄ in den Ausfluss aus dem Faulbehälter (12) an einem oder mehreren Punkten stromaufwärts des Reaktors (22) während der Schritte c. bis e. in einer Menge, die ausreicht, um den pH-Wert des Abwassers auf einen Wert zu senken, bei dem Struvit löslich ist.

2. Verfahren nach Anspruch 1, wobei das H₃PO₄ auf mehreren Stufen eingespritzt wird.

3. Verfahren nach Anspruch 1 oder 2, das des Weiteren den Schritt umfasst, das Einspritzen des H₃PO₄ in das Abwasser entsprechend einem Signal, das von einer pH-Wert-Sonde an oder nahe einem Einlass (24) des Struvit-Reaktortanks (22) empfangen wird, so zu steuern, dass ein zuvor festgelegter Wert von H₃PO₄ in dem Abwasser aufrecht erhalten wird, wobei der zuvor festgelegte Wert eine Menge ist, die ausreicht, um den pH-Wert des Abwassers auf einen Wert zu senken, bei dem Struvit löslich ist.

4. Verfahren nach einem der Ansprüche 1 bis 3, das umfasst, den pH-Wert des Abwassers in dem Struvit-Reaktortank (22) zwischen 7,0 und 8,5 zu halten.

5. Verfahren nach einem der Ansprüche 1 bis 4, das des Weiteren das Einspritzen von CO₂ in das Abwasser stromaufwärts des Struvit-Reaktortanks (22) umfasst.

6. Verfahren nach Anspruch 5, welches das Einspritzen des CO₂ in den Faulbehälter (12) und/oder die Feststoff/Flüssigkeit-Trennvorrichtung (16) und/oder den Absetztank (18) und/oder ein Rohleitungssystem (14) des Behandlungssystems umfasst.

## Revendications

1. Procédé de traitement des eaux usées pour produire de la struvite, le procédé comprenant les étapes consistant à :
a. introduire des eaux usées dans un système de traitement des eaux usées ;
b. après avoir introduit les eaux usées dans le système de traitement des eaux usées, faire digérer les eaux usées dans un digesteur (12) ;
c. à partir du digesteur (12), transférer les eaux usées vers un dispositif de séparation de solides-liquides (16),
d. à partir du dispositif de séparation de solides-liquides (16), éliminer des solides des eaux usées et transférer les eaux usées vers un bassin de décantation (18) ;
e. à partir de bassin de décantation (18), transférer les eaux usées vers une cuve à réaction de struvite (22) destinée à la formation de struvite ; et
f. éliminer un effluent de la cuve à réaction de struvite (22) ;
le procédé comprenant en outre l'étape consistant à :
injecter du H₃PO₄ dans l'effluent provenant du digesteur (12) en un ou plusieurs point(s) en amont du réacteur (22) au cours des étapes c. à e., en une quantité suffisante pour abaisser le pH des eaux usées à un niveau auquel la struvite est soluble.

2. Procédé selon la revendication 1, dans lequel le H₃PO₄ est injecté à de multiples stades.

3. Procédé selon la revendication 1 ou 2, comprenant en outre l'étape consistant à réguler l'injection du H₃PO₄ dans les eaux usées, en réponse à un signal reçu en provenance d'une sonde de pH à une entrée ou au voisinage d'une entrée (24) de la cuve à réaction de struvite (22), pour maintenir un niveau prédéterminé de H₃PO₄ dans les eaux usées, le niveau prédéterminé en une quantité suffisante pour abaisser le pH des eaux usées à un niveau auquel la struvite est soluble.

4. Procédé selon l'une quelconque des revendications 1 à 3, comprenant le maintien du pH des eaux usées dans la cuve à réaction de struvite (22) entre 7,0 et 8,5.

5. Procédé selon l'une quelconque des revendications 1 à 4, comprenant en outre l'injection de CO₂ dans les eaux usées en amont de la cuve à réaction de struvite (22).

6. Procédé selon la revendication 5, comprenant l'injection de CO₂ dans un ou plusieurs parmi le digesteur (12), le dispositif de séparation de solides-liquides (16), le bassin de décantation (18) et un système de tuyauteries (14) du système de traitement.
